# EUROPEAN PATENT APPLICATION

(11) **EP 1 061 286 A1**
(43) Date of publication of application: **20.12.2000**
(21) Application number: 99304797.6
(22) Date of filing: 18.06.1999
(51) Int. Cl.: F16H 15/38

(54) **Drive mechanism for infinitely variable transmission**

(71) Applicant: TOROTRAK (DEVELOPMENT) LIMITED, Leyland, Lancashire PR5 3UX (GB)
(72) Inventor: The designation of the inventor has not yet been filed
(74) Representative: Simpson, Paul Christopher

(57) **Abstract**

A variator of the toroidal race rolling friction type has two toroidal cavities (20, 21) each defined by a central disc (13, 14) and an end disc (11, 12, 36). Variable angle rollers (22, 23) run in the cavities and transmit power between the central and end discs. Normally drive is taken from the central discs (13, 14) which are formed as a single assembly (15), mounted on the variator shaft (10, 30) so as to be free running on two axially spaced bearings (16). The end discs (11, 12, 36) are mounted so as to be rotationally fast with respect to the shaft (10,30). At least one, and preferably both the end discs are capable of rocking to a limited extent out of co-axial relationship with the shaft (10,30). One of the end discs (11, 36) must be capable of receiving an axial load, since the discs and rollers are compressed together axially. The axial load is taken by an annular member (27, 33) fixed to the shaft, co-operating part-aspherical faces being provided on the member (27, 33) and the end discs (11, 36) to accommodate rocking of the disc (11, 36). Drive is transmitted between the disc (11, 36) and shaft (10, 30) by means of splines (26) or a thin, flexible disc (35).

## Description

The present invention relates to infinitely variable ratio transmission apparatus (a "variator") of the toroidal race rolling friction type.

In such apparatus there is employed a main shaft which takes drive from, for example, an engine e.g. an internal combustion engine, to two input discs which are mounted on the shaft. Two output discs are mounted back-to-back between the input discs and are free to rotate relative to the shaft. A toroidal cavity is defined between respective input and output discs in which are situated a number of power transmitting rollers.

Single cavity versions of the type of transmission described above are also known, in which a single input disc is mounted for rotation on an input shaft and a single output disc faces the input disc. Whilst such an arrangement is less likely to suffer from the problems outlined herein, it will be appreciated that the present invention in at least one aspect thereof can be applied to this single cavity arrangement.

Other variants are possible, for example having the input on the central discs and the output on the end discs in a twin cavity arrangement. Equally, the shaft on which all the discs are mounted could be an output shaft instead of an input shaft as in the arrangement described above. These variations and others will be apparent to a skilled person in this field.

An axial end load is applied at one end of the apparatus, the other end normally being mounted in a thrust bearing. The discs and rollers are thereby loaded in compression, which allows the transmission of torque between rollers and discs. In the twin cavity arrangement, power may be transferred from the output discs via, for example, a chain drive to a further transmission component such as an epicyclic gearbox.

It is sometimes found that the wear on the rollers and the bearing laces of the discs is uneven. Amongst the possible causes for this are that the discs defining the cavity or cavities are not precisely parallel. One of the probable causes of this misalignment of discs is flexing of the shaft, particularly during relatively high power transmission in a twin cavity arrangement where the input or output is on the central discs, transmitted via a chain or gear train. It will be appreciated that in this arrangement, there is a degree of loading on the shaft in a direction orthogonal to its axis.

This problem, though a relatively minor one, is being examined in detail by the applicants and a patent application has already been filed which describes a so-called "compliant" end disc which is free to tilt to some extent around the axis of the shaft and is therefore self-aligning. The disc is mounted on the shaft so as to allow transmission of torque between the shaft and disc by means of a relatively flexible spring steel diaphragm which is attached to the shaft and to the outer region of the disc. The specific design detailed in this unpublished patent application relates to an end disc to which load is applied by hydraulic means.

The patent application referred to above is unpublished PCT application number GB 98/03734 in the name of the applicants for the present application, and the contents of the specification of this application are incorporated herein by reference. In quotes below a portion of the specification of this application is reproduced; it will be appreciated that many of the details of the design outlined therein would be applicable to the present invention.

### Extract from GB 98/03734

"The present invention seeks to provide a transmission apparatus in which one or more of the discs is mounted on the shaft in such a manner that it rotates with the shaft but is capable of adopting a plane of rotation which is other than normal.

Accordingly the present invention provides a variator transmission apparatus comprising an input shaft, one or more input discs mounted on the shaft for rotation therewith, an output disc assembly, the input disc or discs and the output disc assembly defining between them one or more toroidal cavities, a plurality of rollers located in the cavity or cavities and means for applying an end load pressure to maintain the rollers in contact with the respective disc or discs in order to transmit drive, characterised in that one of the discs is mounted on the shaft by means of an intermediate relatively flexible member.

The relatively flexible member can be attached to a sleeve at an inner radial location and the sleeve is attached to the shaft so as to be rotatable therewith.

For example the sleeve can be splined so that it is rotatable with the shaft and axially moveable relative to the shaft.

The relatively flexible member can be attached to the sleeve by means of a clamping ring.

The flexible member can be attached at an outer radial location to a clutch ring.

The clutch ring can be provided with projections which are engageable with corresponding recesses on the said one of the discs; alternatively the disc may be provided with projections which are engageable with corresponding recesses on the clutch ring.

The relatively flexible member can be secured at the said outer radial location by means of an outer clamping ring.

A reaction plate can be mounted on the shaft, the reaction plate having two or more sets of pins, one of which said sets of pins being extendable through clearance openings in the flexible member in order to contact a face of the said one of the discs, the pins of one of the other said sets of pins engaging the relatively flexible member at an inner radial location.

The apparatus can include a clamping nut assembly which is threadedly mounted on the shaft in order to force the reaction plate into contact with the said one of the discs by means of the respective one of the said sets of pins.

The other one of said discs can be mounted for rotation with the shaft, and be provided with abutment means to prevent axial movement.

The output disc assembly can be mounted on bearing means which have part spherical co-operating surfaces thereby allowing the disc assembly to rotate relative to the shaft and to adopt a plane of rotation other than normal relative to the shaft.

In a development of the above, the flexible member may also be secured to the reaction plate of the end load mechanism.

In the above development the flexible member may be secured to the reaction plate and the sleeve by means of a bolt arrangement or a rivet arrangement.

In either arrangement, the flexible member may be secured to the disc by means of a bolt or rivet arrangement.

In a still further development, the flexible member in either arrangement may be preshaped or pre-loaded such that upon application of the end load it is substantially perpendicular to the axis of said shaft."

The specific end disc assembly described in GB 98/03734 is not as such suitable for use at the opposite end of the apparatus, where there is no arrangement for applying hydraulic pressure. If a compliant disc is to be designed for this end of the variator, it must be able to accept an axial load as well as being able to tilt about the shaft to a limited extent. The present invention, in its first aspect, addresses the problem of providing such a disc.

According to the first aspect of the present invention, an infinitely variable ratio transmission of the toroidal race rolling friction type comprises discs defining toroidal cavities within which run variable angle rollers, the discs being mounted coaxially with respect to a shaft, at least a first one of the discs being mounted so as to be free to pivot out of coaxial relationship with the shaft to a limited extent, characterised in that:
a) the shaft has, mounted with respect thereto so as to be substantially fixed axially, an annular member having a first part spherical outer face;
b) the first disc has a second part spherical face of complementary form to the first part spherical face; and
c) the first and second surfaces cooperate to resist axial loading of the disc in one direction.

The cooperating part spherical faces allow the disc to accept an axial load and at the same time pivot about the shaft to enable it to align itself with the central disc assembly under axial loading of the system. Of course, this invention is applicable to a single cavity variator and also to a twin cavity variator where the central disc assembly is mounted to the shaft so that torque can be transmitted between the central discs and the shaft, whilst the outer discs are mounted on bearings.

In a preferred arrangement, which is the subject of the embodiment described in this application, the first disc is mounted with respect to the shaft by one or more connecting elements arranged to constrain the disc for rotation with the shaft whilst allowing a degree of pivotal movement of the disc out of coaxial relationship with the shaft. In one advantageous arrangement, the said one or more connecting elements may include an intermediate relatively flexible member. This has the advantage of positively connecting the disc to the shaft for transmission of torque substantially without rotational free play. It is preferred that the radii of the said part spherical faces pass through the radial centre of the intermediate member or at least pass by the radial centre in the vicinity thereof.

In another embodiment, the said one or more connecting elements could comprise relatively loosely interleaved sets of splines. This is a very simple arrangement and has advantages in terms of simplicity of manufacture and low cost and complexity.

Let us assume that an end disc of the type described in GB 98/03734 is fitted to a twin cavity variator in which central discs are formed as a single unit mounted on the shaft via a bearing so as to be tiltable with respect to the shaft. In this arrangement, the other end disc is rigidly splined to the shaft. Drive is taken from the central discs via a chain, so as to apply a sideways load on the shaft, thereby causing a degree of shaft flexing. The compliant end disc is likely to tilt on the shaft so as to preserve its parallel relationship with the central disc assembly. The other end disc, which is splined to the shaft in the conventional manner, will necessarily remain orthogonal to the shaft at the point where it is mounted to the shaft.

It is believed that the axial loading of the system should tend to induce the central disc assembly to align itself into a parallel relationship with the other discs to the extent that its mounting permits it to do so. Accordingly, the central disc assembly should tilt on the shaft so as to maintain its parallel relationship with the fixed end disc, whilst the compliant end disc will tilt on the shaft to accommodate both shaft bending and the tilting of the central disc assembly.

This arrangement has worked satisfactorily in a previous variator design for a front wheel drive transmission. In that design, drive is taken from the central disc assembly via a chain passing around the outer diameter of the central assembly; such an arrangement leads to a variator with a short axial dimension and a relatively large diameter, which is appropriate for a front wheel drive transmission. The variator relies in part on the rollers being under axial load to impart stiffness to the system and reduce shaft flexing. Even in that design, a certain amount of unevenness of temperature distribution has been observed in the rollers situated between the central disc assembly and the fixed end disc, and it is not impossible that this is due to uneven loading of the rollers caused by distortion of the cavity due to shaft flexing.

The shaft flexing issue becomes more noticeable when a variator for a rear wheel transmission is designed. In a rear wheel drive situation, it is more important for the overall diameter of the variator to be small, whereas the length of the variator is not so crucial. To accommodate these design constraints, the central disc assembly is arranged with the two discs separated by a smaller diameter region around which the output chain passes. This obviously makes the central disc assembly longer in the axial direction.

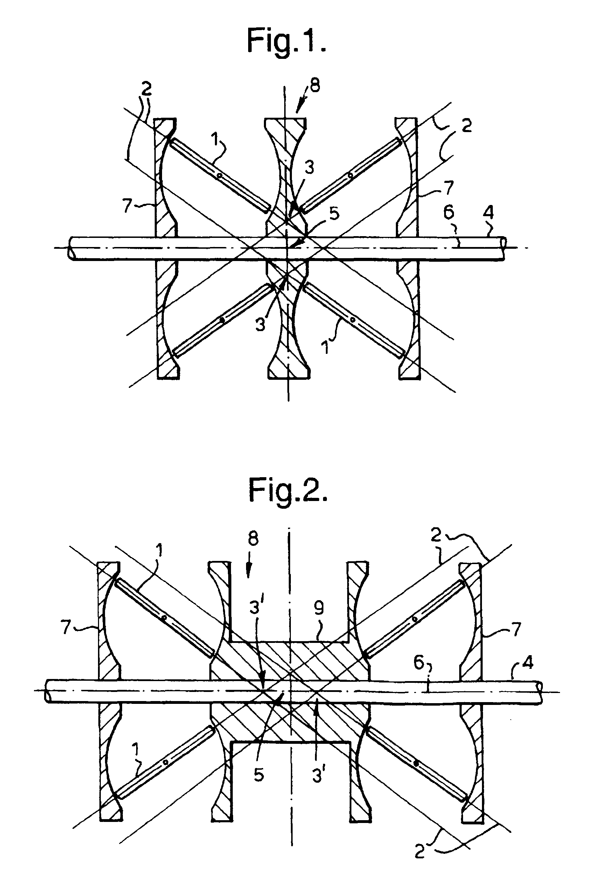

Unexpectedly, the degree of shaft flexing in this variator design is markedly increased. This phenomenon has been explained as follows. Firstly, consider an arrangement in which the central disc assembly is relatively short in the axial direction, shown schematically in Figure 1. When the rollers 1 are at their maximum angle in the sense of "pointing" both axially and radially inwards, the extrapolated planes 2 of corresponding rollers on each side of the variator intersect at 3, some distance radially from the shaft 4. It follows that flexing of the shaft around a point 5 at the axial centre of the variator will be resisted by the rollers which are subject to considerable end loading. The roller angle shown in Figure 1 is the "worst case"; when the angle is changed from that shown, flexing will be resisted more effectively since the points 3 will be further from the shaft axis.

If the central assembly 8 is made longer, for example with a reduced diameter central portion 9, the planes 2 of the rollers 1 will intersect with the shaft axis 6 at points 3' before intersecting with each other. This situation is shown schematically in Figure 2. In these circumstances it will be apparent that the arrangement of the rollers compressed between discs 7 on each side of the variator will in fact contribute little or nothing to the resistance of the system to flexing about the point 5. This accounts for the increased shaft flexing in the design with the longer central disc assembly 8. It should be appreciated that Figures 1 and 2 are highly schematic and do not specifically show, for example, the ability or otherwise of the central assembly and/or end discs to tilt.

The aspect of the invention described below may therefore be a useful approach for any design of twin cavity variator, but it is particularly suited to a design in which the central discs are separated by an additional smaller diameter region for taking drive from the variator. The second aspect of the invention involves mounting the central disc assembly so as to be substantially restrained against tilting, so as to impart stiffness to the variator.

According to the second aspect of the invention, an infinitely variable ratio transmission of the toroidal race rolling friction type comprises two toroidal cavities in back-to-back relationship defined by respective central and end discs, the discs being mounted coaxially with respect to a shaft, characterised in that:
a) the central discs are mounted so as to be substantially restrained against pivotal movement out of coaxial relationship with the shaft, and
b) at least one of the end discs is mounted so as to be free to pivot out of coaxial relationship with the shaft to a limited extent.

The advantage of this arrangement is that the rigidity of the variator is enhanced with the central discs maintained orthogonal to the shaft at the point where they are mounted to the shaft, whilst at least one of the end discs is compliant so as to maintain the symmetry of one or more of the toroidal cavities, thus reducing wear in that cavity. Furthermore, additional resistance to flexing is provided at the point where it is needed most, namely at the axial centre of the variator; this is a particular advantage in a variator with a central disc assembly which is relatively large in the axial direction.

It is of course much preferred that each of the end discs is mounted so as to be free to pivot out of coaxial relationship with the shaft to a limited extent.

In one embodiment, the end discs are fixed for rotation with the shaft and the central discs are mounted so as to allow relative rotation around the axis of the shaft. This is the currently preferred arrangement and the one described in detail in this application, where the shaft is the input shaft and the drive is taken from the central discs.

Preferably, the central discs together comprise a single rigid assembly mounted so as to be substantially restrained against pivotal movement out of coaxial relationship with the shaft. Again, the preferred arrangement and the one described in detail here is to have the central discs as a single unit. This enhances stability of the system and leads to a compact arrangement.

In one embodiment, there is provided an element for driving or for taking drive from the central discs which in the course of driving or taking drive from the central discs exerts a load on the central discs orthogonal to the axis of the shaft. Again, this is the situation described in detail here, but the issue of preserving the symmetry of the toroidal cavities is not one which necessarily arises only where the phenomenon of shaft flexing is observed. Furthermore, shaft flexing may not be the only cause of asymmetry in the toroidal cavities.

The invention is particularly well suited to the case where the drive to or from the central disc assembly is to or from a reduced diameter portion of the assembly between the discs themselves.

It is preferred that one of the end discs is arranged to withstand an axial load without substantial axial movement with respect to the shaft, whilst being free to pivot out of coaxial relationship with the shaft to a limited extent.

It is also preferred that one or more of the end discs is mounted with respect to the shaft by means of an intermediate relatively flexible member.

An arrangement embodying both aspects of the invention, in addition to a further embodiment of the first aspect, will now be described by way of example only, with reference to the accompanying drawings in which:-
Figure 1 is a schematic representation of a twin cavity variator;
Figure 2 is a schematic representation of a twin cavity variator having a relatively long central disc assembly;
Figure 3 is a slightly schematic side sectional view through a variator in accordance with the first and second aspects of the invention; and
Figure 4 is a sectional view of part of a further embodiment in accordance with the first aspect of the invention.

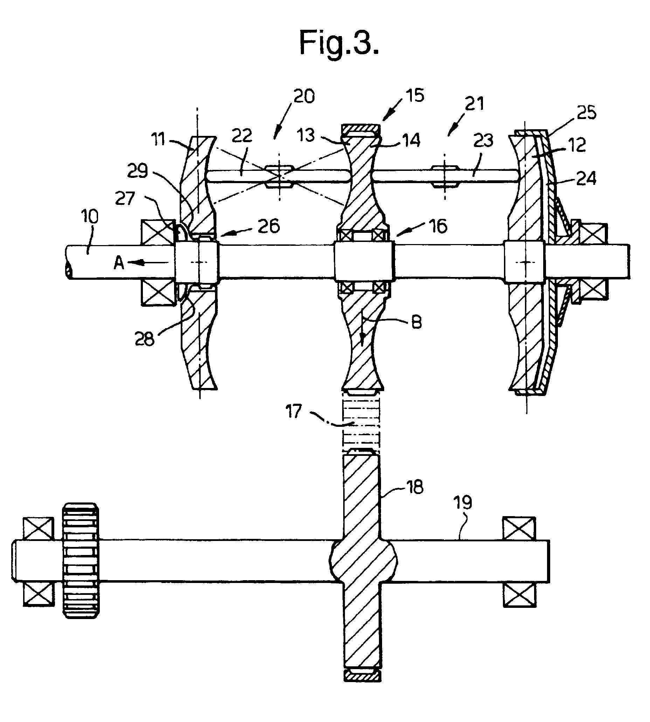

Turning now to Figure 3, a twin cavity toroidal race rolling friction type variator is shown having an input shaft 10, end discs 11,12 mounted for rotation with the input shaft and central discs 13,14 which together form a central disc assembly 15, which is mounted on the shaft 10 via bearings 16. Located between the end and central discs in toroidal cavities 20,21 are rollers 22,23. Drive is taken from the central disc assembly 15 via a chain 17 to a gear 18 which is mounted on an output shaft 19.

At the right-hand side of Figure 3, the disc 12 has a cavity 24 behind it defined between the disc 12 and a reaction member 25. This cavity is supplied by a hydraulic fluid channel (not shown).

At the left-hand end of Figure 3, the end disc 11 is mounted to the shaft 10 by means of a spline joint 26 which has a certain amount of play in it allowing the disc 11 to tilt such that its axis is no longer coaxial with that of the shaft 10. Securely attached to the shaft 10 so as to resist both relative rotational movement and relative axial movement with the shaft is an annular ring 27. In a modification, the ring 27 might be formed integrally with the shaft. The ring 27 has a concave part spherical outer face facing towards the disc 11. The disc 11 has a complementary convex part spherical face 29. Together the faces 27,29 form a bearing which allows the disc 11 to tilt on the shaft 10 whilst preventing axial movement of the disc 11 in the direction of arrow A.

In operation the variator will have an end load applied to it by pressurising the hydraulic chamber 24. Since the discs 12 and 15 are free to move to a limited extent in an axial direction, the load is transferred throughout the variator and the disc 11 pressed against the bearing ring 27.

As the assembly is driven, and output taken via the chain 17, a sideways load is exerted on the shaft 10 in the direction of arrow B which causes a degree of flexing of the shaft 10. Disc 11 on the left-hand side of Figure 3 will adjust itself automatically to be parallel to the central disc when under load, this being made possible by the presence of the bearing arrangement with the ring 27 and the loose spline joint 26. The disc 12 on the right-hand side of Figure 3, conversely, will remain orthogonal to the shaft.

The central disc assembly 15 is mounted on two bearings which are spaced apart axially along the shaft, thereby imparting rigidity as regards tilting. The anchoring of the central disc assembly in this way imparts rigidity to the system, but of course with the central assembly mounted in this way, it is extremely preferable for the right-hand disc 12 also to be mounted so as to be compliant in order to avoid or reduce distortion of the right-hand cavity 21.

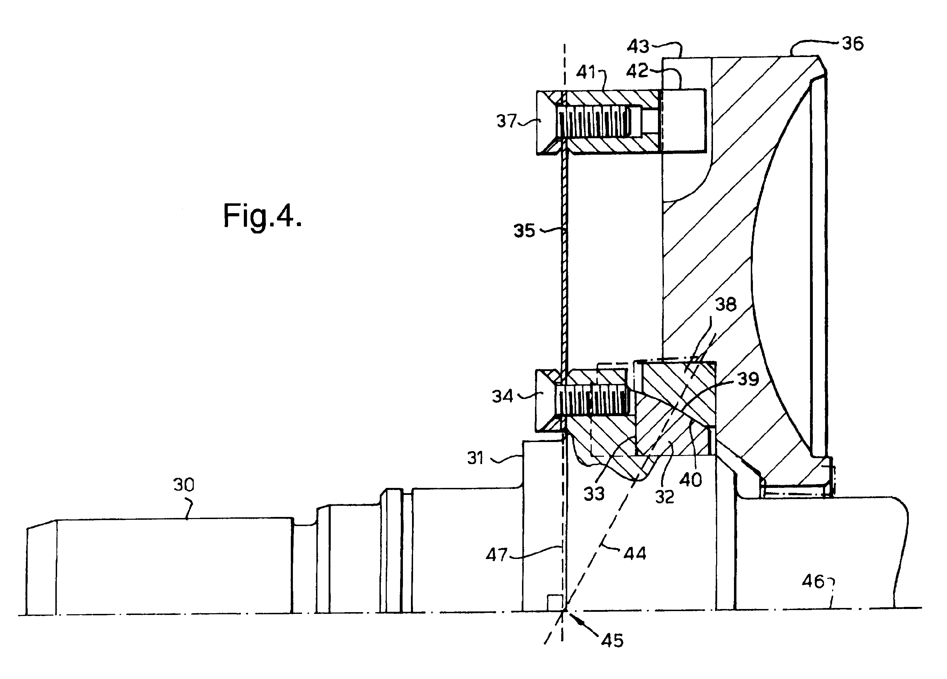

Turning now to Figure 4, an alternative embodiment for the compliant end disc is shown in detail. The shaft 30 is formed with an enlarged diameter portion 31 on which is securely mounted a ring 32 against a shoulder 33. Securely mounted to the shaft by means of bolts 34 is a spring steel diaphragm 35, which is in turn mounted to an outer ring 41 by means of bolts 37. The ring 41 has axially directed teeth 42 which intermesh with corresponding teeth 43 on the disc, thus allowing transmission of torque between the disc and diaphragm.

Fitted to the left-hand side of the disc as shown in Figure 4 is a bearing member 38 with a part spherical concave surface 39 complementary to a similar concave surface 40 on the ring 32. The coincident radii 44 of the part spherical surfaces 39, 40 intersect with the axis 46 of the shaft and with the extrapolated plane 47 of the diaphragm at a point 45.

The operation of the components should be reasonably self-explanatory. The disc 36 is mounted to the shaft 30. Transmission of torque is enabled by means of the flexible spring steel diaphragm 35. The diaphragm transmits torque whilst allowing flexing. Axial load is taken by means of the ring 32 and member 38, similar to the embodiment shown in Figure 3. The alignment of the radii of the spherical surfaces 39, 40 with the axis of the shaft and the plane 47 of the diaphragm allow for flexing of the diaphragm and tilting of the disc with minimum resistance. For further details of possible constructions of the disc and diaphragm 35, see GB 98/03734

## Claims

1. An infinitely variable ratio transmission of the toroidal race rolling friction type, comprising two toroidal cavities in back to back relationship defined by respective central and end discs, the discs being mounted coaxially with respect to a shaft, characterised in that:
(a) the central discs are mounted so as to be substantially restrained against pivotal movement out of coaxial relationship with the shaft, and
(b) at least one of the end discs is mounted so as to be free to pivot out of coaxial relationship with the shaft.

2. A transmission as claimed in Claim 1 in which each of the end discs is mounted so as to be free to pivot out of coaxial relationship with the shaft.

3. A transmission as claimed in Claim 1 or Claim 2 in which the end discs are fixed for rotation with the shaft and the central disc is mounted so as to allow relative rotation around the axis of the shaft.

4. A transmission as claimed in any preceding claim in which the central discs together comprise a single rigid assembly mounted so as to be substantially restrained against pivotal movement out of coaxial relationship with the shaft.

5. A transmission as claimed in any preceding claim in which the output is taken from the central discs.

6. A transmission as claimed in any preceding claim including an element for driving or for taking drive from the central discs which in the course of driving or taking drive from the central discs exerts a load on the central discs orthogonal to the axis of the shaft.

7. A transmission as claimed in any preceding claim in which one of the end discs is arranged to withstand an axial load without substantial axial movement with respect to the shaft, whilst being free to pivot out of coaxial relationship with the shaft.

8. A transmission as claimed in any preceding claim in which one or more of the end discs is mounted with respect to the shaft by means of an intermediate relatively flexible member.

9. An infinitely variable ratio transmission of the toriodal race rolling friction type, comprising discs defining one or more toriodal cavities between them, within which cavities run variable angle rollers, the discs being mounted coaxially with respect to a shaft, at least a first one of the discs being mounted so as to be free to pivot out of coaxial relationship with the shaft, characterised in that:
(a) axially fixed with respect to the shaft and coaxial with it is an annular member having a first part spherical outer face, and
(b) the first disc has a second part spherical face of complementary form to said first part spherical face,
(c) said first and second part spherical faces being arranged to resist axial loading of the first disc in one direction.

10. A transmission as claimed in Claim 9 wherein the said first disc is mounted with respect to the shaft by one or more connecting elements arranged to constrain the disc for rotation with the shaft whilst allowing a degree of pivotal movement of the disc out of coaxial relationship with the shaft.

11. A transmission as claimed in Claim 10 wherein the said one or more connecting elements include an intermediate relatively flexible member.

12. A transmission as claimed in Claim 10 wherein the said one or more connecting elements comprise relatively loosely interleaved sets of splines.

13. A transmission having the features of Claim 1 together with those of Claims 9, 10, 11 or 12.
